(19) Europäisches Patentamt
European Patent Office
Office européen des brevets

(11) Veröffentlichungsnummer: **0 065 283**
**B1**

(12) # EUROPÄISCHE PATENTSCHRIFT

(45) Veröffentlichungstag der Patentschrift: **24.07.85**

(51) Int. Cl.⁴: **C 09 D 7/12,** C 09 D 11/02, B 41 M 5/035

(21) Anmeldenummer: **82104182.9**

(22) Anmeldetag: **13.05.82**

(54) **Verdickungsmischungen, Verfahren zur Herstellung von Transferdruckpapieren unter Verwendung dieser Mischungen und die so erhaltenen Papiere.**

(30) Priorität: **18.05.81 DE 3119711**

(43) Veröffentlichungstag der Anmeldung: **24.11.82 Patentblatt 82/47**

(45) Bekanntmachung des Hinweises auf die Patenterteilung: **24.07.85 Patentblatt 85/30**

(84) Benannte Vertragsstaaten: **BE CH DE FR GB IT LI NL**

(56) Entgegenhaltungen:
**DE - A - 2 438 868**
**DE - B - 2 255 314**
**US - A - 4 172 055**

(73) Patentinhaber: **HOECHST AKTIENGESELLSCHAFT, Postfach 80 03 20, D-6230 Frankfurt am Main 80 (DE)**

(72) Erfinder: **Ong, Sienling, Dr., Jahnstrasse 38, D-6238 Hofheim am Taunus (DE)**
Erfinder: **Karsunky, Ulrich, Fliederweg 12, D-6257 Hünfelden (DE)**
Erfinder: **Schmidt, Helmut, Dr., Nelkenweg 12, D-6238 Hofheim am Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die vorliegende Erfindung betrifft Verdickungsmischungen für wässrige Druckfarben zum Aufbringen von heiss sublimierbaren Dispersionsfarbstoffen auf Thermotransferdruckpapier im Tiefdruck; ein Verfahren zur Herstellung von Thermotransferdruckpapieren im Tiefdruck mit wässrigen Druckfarben, die neben den Farbstoffen solche Verdickungsmischungen enthalten; sowie die auf diesem Wege erhaltenen Thermotransferdruckpapiere.

Einwandfreie Druckmuster auf Polyestertextilgewebe oder -gewirke nach dem Thermoumdruckverfahren kann man lediglich dann erhalten, wenn die bedruckten Stellen auf dem Transferdruckpapier aus einem körperarmen sowie dünnen, elastischen aber abriebfesten, organophilen aber auf dem Papier haftenden filmbildenden Auftrag bestehen.

I) Hauchdünne, körperarme Aufträge beim wässrigen Druck auf Papier lassen sich bekanntlich bloss mit hochviskosen thixotropen Verdikkungsmitteln erzeugen. Hochviskose und thixotrope Eigenschaften hat ein synthetisches Verdikkungsmittel aber nur, wenn es eine vernetzte Struktur besitzt. Die guten thixotropischen Eigenschaften gewährleisten hierbei scharfe Konturen und Ränder des Druckmusters.

Solche dünnen und körperarmen Aufträge sind unerlässlich, um eine gute Farbausbeute auf dem Textilmaterial zu erzielen, weil das Rückhaltevermögen dieser Filme gegenüber dem sublimierbaren Dispersionsfarbstoff unter anderem auch von der Verdickungsmenge auf den bedruckten Stellen abhängt.

II) Darüber hinaus muss der filmbildende Auftrag an den bedruckten Stellen des Transferdruckpapiers sehr elastisch sein, weil die bedruckten Transferdruckpapiere für die Weiterverarbeitung üblicherweise gelagert und transportiert werden. Hierbei dürfen die bedruckten Stellen des Papiers weder absplittern noch abreiben.

III) Schliesslich spielt die Organophilie des filmbildenden Auftrages auf dem Transferdruckpapier eine sehr wichtige Rolle, um die vorzeitige Sublimation der Dispersionsfarbstoffe bei erhöhter Temperatur auszuschliessen, die während der Lagerung oder beim Transport unter tropischen Bedingungen auftreten kann, weil dadurch das für den Thermoumdruck bemusterte Papier wertlos wird. Diese Organophilie darf indessen nicht zu gross sein, da sonst wiederum auch der Übertrag des Dispersionsfarbstoffes vom Papier zum Textilmaterial durch Sublimation zu stark behindert wird.

Diese geforderten Eigenschaften lassen sich entsprechend der vorliegenden Erfindung durch Verdickungsmischungen realisieren, gemäss denen als Komponenten

a) ein Copolymerisat aus Vinylacetat und einer ungesättigten niedermolekularen Carbonsäure,

b) ein Copolymerisat aus Maleinanhydrid und Ethylen oder eine Polyacrylsäure,

c) eine Verbindung der Formel

$$C_nH_{2n+2-m}(OH)_m$$

in der n eine ganze Zahl von 4 bis 6 und m 1 bis 6 ist, mit der Massgabe, dass m kleiner oder gleich n ist,

d) eine Verbindung der Formel

$$C_aH_{2a+2-b}[O(CH_2-\underset{\displaystyle CH_3}{\underset{|}{C}}H-O)_{x/b}-H]_b$$

in der a eine ganze Zahl von 2 bis 6,
b eine ganze Zahl von 1 bis 6 und
x eine Zahl von 8 bis 60 ist, mit der Massgabe, dass b kleiner oder gleich a ist, und

e) eine Verbindung der Formel

$$C_yH_{2y+2-z}(OH)_z$$

in der y eine ganze Zahl von 1 bis 6 und z eine ganze Zahl von 1 bis 6 ist, mit der Massgabe, dass z kleiner oder gleich y ist, eingesetzt werden.

Im Einklang mit den jeweils gleichlautend kodifizierten Komponenten sind die erfindungsgemässen Verdickungsmischungen gekennzeichnet, durch einen Gehalt an

(a) einem Polymerisat, das in Wasser praktisch unquellbar, in einem mit bis zu 50 Gew.-% Wasser verdünnten organischen Lösemittel jedoch quellbar ist, und

(b) einem wasserquellbaren Polymerisat.

Diese beiden Polymerisate erlauben es, in Form ihrer wässrig-organischen Gele die Viskosität wässriger Tiefdruckfarben einzustellen. Sie wirken hierbei nicht nur verdickend, sondern auch dispergierend, filmbildend und migrationshemmend.

Derartige wässrig-organische Gele werden zweckmässig aus Konzentraten hergestellt, die neben den beiden Polymerisaten a) und b) zusätzlich als Komponenten:

(c) eine bei Zimmertemperatur feste, wasserlösliche, niedermolekulare Polyhydroxyverbindung und

(d) ein bei Zimmertemperatur nicht wassermischbares, mit organischen, vollständig wassermischbaren Lösemitteln jedoch vollständig mischbares organisches Lösemittel enthalten. Diese Konzentrate werden dann noch mit

(e) einem bei Zimmertemperatur flüssigen, mit Wasser vollständig mischbaren organischen Lösemittel und Wasser versetzt.

Die Konzentrate können noch weitere Hilfsmittel wie oberflächenaktive Substanzen, beispielsweise Emulgatoren, Entschäumer und Natriumsulfit enthalten.

Als Polymerisate (a) sind die aus der DE-PS 803 956 und der GB-PS 733 507 bekannten Copolymerisate aus Vinylacetat und einer ungesättigten niedermolekularen Carbonsäure wie Acrylsäure, Crotonsäure oder Maleinsäure geeignet, wobei der Anteil an der ungesättigten Carbonsäure so gering gehalten wird, dass das Copolymerisat gemäss der Erfindung dem oben dargelegten typischen Verhalten in Bezug auf seine Befähigung zum Quellen entspricht. Da die verdikkende Wirkung hochmolekularer Substanzen von dem Grad ihrer Quellbarkeit im verwendeten Lösungsmittel abhängt, können die als Komponente (a) bezeichneten Copolymerisate in farbstoffhaltigen gebrauchsfertigen Druckpasten aufgrund deren minimalen Lösungsmittelgehalts dort keinesfalls die Funktion eines üblichen Verdickers besorgen. Sie liegen in solchen Druckpasten vielmehr kolloid ausgeflockt vor.

Als wasserquellbare Polymerisate (b) kommen Polyacrylsäuren, wie sie beispielsweise in der US-PS 3 066 118 und der DE-OS 1 595 727 beschrieben werden, oder Copolymerisate aus Ethylen und Maleinanhydrid, wie sie aus der DE-OS 2 534 792 bekannt sind, in Betracht.

Die Polymerisate (a) und (b) können auch in Form ihrer Salze, insbesondere in Form ihrer Ammonium- oder Aminsalze eingesetzt werden. Diese Salzbildung kann man jedoch auch erst in der Verdickermischung selbst oder einem entsprechenden Konzentrat herbeiführen.

Als bei Zimmertemperatur feste, wasserlösliche, niedermolekulare Polyhydroxyverbindungen (c) finden solche Verwendung, welche vorteilhaft einen Schmelzpunkt über 50 °C haben. Hierbei handelt es sich besonders um 1,1,1-Trimethylolpropan, Pentaerythrit oder Zuckeralkohole wie Sorbit oder Mannit.

Als bei Zimmertemperatur nicht wassermischbare, mit organischen, vollständig wassermischbaren Lösemitteln jedoch vollständig mischbare organische Lösemittel (d) sind bevorzugt Oxpropylate von n-Butanol, n-Propanol oder Isopropanol zu nennen.

Als bei Zimmertemperatur flüssige, mit Wasser vollständig mischbare organische Lösungsmittel (e) haben sich insbesondere Verbindungen mit einem Siedepunkt von unter 90 °C bewährt. Bevorzugt sind n-Propanol, Isopropanol und insbesondere Methanol und Ethanol.

Aufgabe der erwähnten Copolymerisate (a) nach der vorliegenden Erfindung ist es vor allem, auf dem Papier nach dem Druck und Trocknung einen organophilen, elastischen Film zu bilden, der auf dem Substrat haften bleibt. Aufgrund ihres hohen Gehaltes an Vinylacetat im Makromolekül sind sie zur Filmbildung samt den gewünschten Eigenschaften in der Lage. Der Schutz gegen Abrieb wird dagegen von den Verdickungsmitteln der Komponente (b) mit der vernetzten Struktur übernommen. Die Organophilie der polymeren Verbindungen in Komponente (a) wird im vorliegenden Fall durch Beimischung der Komponenten (c) und (d) in dem gewünschten Mass gesteuert.

Nun sind in der DE-A 24 38 868 wohl bereits wässrige Überzugsmittel (z.B. Anstrichfarben) beschrieben worden, die als Bestandteil neben filmbildenden Komponenten oder Bindemitteln (ggf. zusammen mit Pigmenten zur Farbgebung) sowie fluorhaltigen Verbindungen insbesondere Verdickermischungen enthalten, welche auf der Basis von Copolymeren aus ungesättigten Säuren und deren Estern oder ungesättigten Säureanhydriden mit Vinylacetat zusammengesetzt sind. Es wird auch dort erwähnt, dass diese polymeren Verdickungsmittel nicht nur die Eindickung des Anstrichmittels bewirken, sondern auch (zusammen mit den fluorhaltigen KW-Verbindungen) zur Verbesserung der Fleckenbeständigkeit und Reinigbarkeit der Überzüge beitragen. Eine technische Lehre für die erfindungsgemässen Verdikkungsmischungen hinsichtlich ihrer Zusammensetzung wie auch hinsichtlich ihrer Eigenschaften lässt sich aus diesem Stand der Technick allerdings nicht herleiten. Zum Unterschied vom Aufbauprinzip der Komponente (b), die durch eine vernetzte Struktur gekennzeichnet ist, besitzen die nach der DE-A 24 38 868 eingesetzten Verdickungsmittel diese Vernetzungen nicht und können daher auch nicht die genannten Eigenschaften der Komponente (b) zeigen. Die Verdikkungsmittel gemäss DE-A 24 38 868 sind vielmehr zur Herstellung von Anstrichmitteln unter Zusatz von Feststoffen bestimmt und brauchen deshalb derartige Eigenschaften wie im vorliegenden Fall nicht aufzuweisen. Ebenso müssen diese bekannten Anstrichmittel keine ausgeprägte Elastizität auf dem Substrat hervorbringen. Letzten Endes besitzen Ester von Polycarbonsäuren gemäss DE-A 24 38 868 eine zu grosse Organophilie, um als Bestandteil von Verdickungsmischungen für Transferdruckfarben geeignet zu sein.

Nach der vorliegenden Erfindung können aus den genannten Komponenten bzw. ihren Kombinationen die Farbpasten nach verschiedenen Methoden hergestellt werden.

Eine Methode besteht beispielsweise darin, dass man mit getrennten Verdickerpasten arbeitet:

Man stellt zunächst eine Verdickerpaste A aus dem Polymerisat a) dem wassermischbaren Lösemittel e) und Wasser her, weiterhin eine Verdikkerpaste B aus dem nichtwassermischbaren Lösemittel d), dem wasserquellbaren Polymerisat b) und einem wassermischbaren Lösemittel e), worauf die beiden Verdickerpasten A und B unter Zusatz der festen Polyhydroxyverbindung c) vermischt und unter Rühren mit Wasser verdünnt werden. Sowohl der Verdickerpaste A als auch der Verdickerpaste B können die genannten oder andere übliche Hilfsmittel zugesetzt werden, ebenso beim Verrühren der beiden Verdickerpasten mit der festen Polyhydroxyverbindung c).

Es ist aber auch möglich, Kombinationen entsprechend den Verdickerpasten A und B mit der festen Polyhydroxyverbindung c), gegebenenfalls unter Zusatz von Hilfsmitteln, zu einem Verdickerkonzentrat zu vermischen.

In allen Fällen können diese Verdickerkonzentrate einfach mit dem Farbstoff in der normalen handelsüblichen Form und Wasser zu einer druckfertigen Farbpaste verarbeitet werden.

Bezogen auf 1 000 g enthalten die druckfertigen Farbpasten zweckmässig die folgenden Mengen der Komponenten:

a) 10 bis 100 g, insbesondere 10 bis 50 g,
b) 0,5 bis 10 g insbesondere 1 bis 5 g,
c) 3 bis 60 g, insbesondere 3 bis 30 g,
d) 2 bis 50 g, insbesondere 3 bis 30 g und

e) 5 bis 150 g, insbesondere 5 bis 80 g.

Vorteilhaft werden, bezogen auf 1 000 g Druckfarbe, weiterhin zugesetzt:

0,05 bis 0,3 g Emulgator,
0,1 bis 1 g Entschäumer und
0,1 bis 0,5 g Natriumsulfit.

Als Emulgatoren werden nichtionische Verbindungen mit einem HLB-Wert von 2 bis 20 bevorzugt. Als Entschäumer werden wasserlösliche Produkte bevorzugt. Das Natriumsulfit wird zweckmässig in kristalliner Form zugesetzt.

Wenn die Polymerisate a) und/oder b) in Form der freien Säuren eingesetzt werden, setzt man dem Ansatz zweckmässig eine geeignete Base zu, bevorzugt etwa 5 bis 25 g wässrige 25%-ige Ammoniaklösung, bezogen auf 1 000 g Druckfarbe.

Die Verdickermischungen, soweit sie aus den Komponenten a), b), c) und d) bestehen, enthalten keine flüchtigen brennbaren Lösemittel. Da das flüssige Lösemittel e) nur in der Menge erforderlich ist, dass das Polymerisat a) quillt, enthalten auch die Verdickermischungen, die die Komponente e) aufweisen, und vor allem die daraus hergestellten Druckerfarben nur ausserordentlich geringe Mengen an flüchtigen brennbaren Lösemitteln. Es sind also die bei üblichen Tiefdruckfarben auf Lösemittelbasis erforderlichen Vorkehrungen entbehrlich. Überraschenderweise werden jedoch mit den erfindungsgemässen Verdikkungsmischungen und den daraus hergestellten wässrigen Druckfarben im Tiefdruck Transferdruckpapiere und damit beim Thermoumdruck Textildrucke erzielt, die den mit Lösemittelfarben im Tiefdruck erreichten Qualitäten gleichwertig sind. Im Gegensatz zu bekannten wässrigen Druckfarben werden die Näpfchen der Tiefdruckraster bei den erfindungsgemässen Druckfarben vollständig entleert, d.h. es entstehen keine «missing dots», was zu einem egalen Druckbild führt.

Besonders vorteilhaft ist es, dass mit den erfindungsgemässenVerdickungsmitteln hergestellte Druckfarben auf beliebiges Papier gedruckt werden kann, d.h. dass kein speziell vorbehandeltes Papier erforderlich ist. Es wurde bereits erwähnt, dass die Dispersionsfarbstoffe in ihrer handelsüblichen Form eingesetzt werden können, also keine speziellen Präparationen erforderlich sind. Es ist auch nicht erforderlich, die bedruckten Transferpapiere mit einer Schutzschicht zu überziehen.

Das Verdrucken der mit den erfindungsgemässen Verdickern erhaltenen Farben erfolgt nass-introcken, d.h. nach dem Druck jeder Farbe erfolgt eine Zwischentrocknung.

Die Erfindung betrifft deshalb auch ein Verfahren zur Herstellung von Thermotransferdruckpapieren durch Bedrucken von Papier mit wässrigen, heiss sublimierbare Dispersionsfarbstoffe enthaltenden Druckfarben im Tiefdruck, das dadurch gekennzeichnet ist, dass die Druckfarben eine erfindungsgemässe Verdickungsmischung enthalten und nach dem Druck jeder Farbe eine Zwischentrocknung erfolgt. Auf diese Weise werden scharf stehende Drucke erhalten, die den mit den üblichen Tiefdruckfarben auf Lösemittelbasis in nichts nachstehen. Das erfindungsgemässe Verfahren kann auch nach den Trichromie-Prinzip durchgeführt werden. Da die Druckfarben nur minimale Mengen an brennbaren Lösemitteln enthalten, ist deren Konzentration in der Abluft so gering, dass keinerlei besondere Vorkehrungen hinsichtlich der Entflammbarkeit oder Explosionsgefährdung getroffen werden müssen.

Die so erhaltenen Thermotransferdruckpapiere zeichnen sich durch ein scharfes und egales Druckbild bei einwandfreiem Rapport aus. Auch ohne zusätzliche Beschichtung sind die Papiere einwandfrei lagerstabil und führen beim Thermoumdruck zu hervorragenden Textildrucken.

Gegenstand der Erfindung sind deshalb auch Thermotransferdruckpapiere, die im Tiefdruck mit einer wässrigen Druckfarbe bedruckt wurden, die neben den heiss-sublimierbaren Dispersionsfarbstoffen eine erfindungsgemässe Verdickungsmischung enthielten.

Der Thermotransferdruck ist allgemein bekannt und beispielsweise in den FR-PSS 1 223 330, 1 334 829 und 1 585 119 eingehend beschrieben. Hierbei werden die bedruckten Transferdruckpapiere in engen Kontakt mit dem zu bedruckenden Textilmaterial gebracht, worauf unter Wärme- und gegebenenfalls Druck- oder Vakuumeinwirkung der Farbstoff von dem Träger auf das Substrat transferiert und dort fixiert wird.

In den folgenden Beispielen beziehen sich Prozentangaben auf das Gewicht, sofern nichts anderes angegeben ist.

Beispiel 1

Herstellung der Farbpasten aus getrennten Verdickerpasten

Als Verdickerpaste A wird eine 50%-ige Lösung eines nichtwasserquellbaren Copolymerisats aus Vinylacetat und Crotonsäure eingesetzt, die durch Lösen von

| | |
|---|---|
| 500 g | des Copolymerisats in |
| 240 g | Methanol, |
| 203 g | Wasser, |
| 50 g | 25%-iger wässriger Ammoniaklösung und |
| 7 g | kristallinem Natriumsulfit |
| 1 000 g | |

unter Rühren erhalten wurde. Diese Lösung zeigt eine Viskosität von 1,5 bis 3,5 Pas.

Die Verdickerpaste B wird erhalten durch Vermischen unter Rühren von

| | |
|---|---|
| 641 g | eines Umsetzungsprodukts von n-Butanol mit 17 Mol Propylenoxid, |
| 246 g | eines wasserquellbaren Polyacrylsäureammoniumsalzes (gemäss DE-AS 1 103 585 Molgewicht 500 000), |
| 95 g | Ethanol und |
| 18 g | eines Umsetzungsprodukts von Oleylalkohol mit 15 Mol Ethylenoxid als Emulgator |
| 1 000 g | |

Aus diesen Verdickerpasten wird der gebrauchsfertige Verdicker wie folgt erhalten:

| | |
|---|---|
| 250 g | der Verdickerpaste A, |
| 30 g | der Verdickerpaste B, |
| 3 g | eines wasserlöslichen Entschäumers und |
| 17 g | 1,1,1-Trimethylolpropan werden unter Rühren mit |
| 700 g | Wasser verdünnt. |
| 1 000 g | |

Mit 250 bis 300 g dieses wässrigen Verdickers werden 20 bis 200 g Farbstoff innig vermischt und mit Wasser auf 1 000 g zu einer Farbpaste verdünnt.

Beispiel 2

Herstellung der Farbpasten mit einem einzigen Verdickerkonzentrat

Durch Vermischen unter Rühren von

| | |
|---|---|
| 250 g | der Verdickerpaste A, |
| 30 g | der Verdickerpaste B, |
| 3 g | eines wasserlöslichen Entschäumers und |
| 7 g | 1,1,1-Trimethylolpropan werden |
| 290 g | |

gebrauchsfertiges Verdickerkonzentrat erhalten.

Mit 71 bis 85 g dieses Verdickerkonzentrats, 20 bis 200 g Farbstoff und Auffüllen mit Wasser auf 1 000 g wird eine druckfertige Farbpaste hergestellt.

Beispiel 3

Trichromie-Papierdruck

Auf einer Tiefdruckmaschine (System CERUTTI-ROTOPRESS) wird eine Papierbahn mit den folgenden, nach Beispiel 1 erhaltenen Druckfarben bedruckt:

| Farbe | Farbstoff nach Beispiel ... der EP-OS 28 342 | g |
|---|---|---|
| Gelb | 19 | 80 |
| Rot | 3 | 200 |
| Blau | 14 | 200 |
| Schwarz | * | 400 |

*Mischung aus etwa 80% Blau,
13% Gelb und
7% Rot,

wie vorstehend angegeben. Nach dem Druck jeder Farbe wird das bedruckte Papier in der Mansarde zwischengetrocknet.

Das so erhaltene Transferdruckpapier fleckt auch bei längerem Lagern nicht ab und ergibt im Thermotransferumdruck hervorragende Druck auf Polyestertextilmaterialien.

## Patentansprüche

1. Verdickungsmischungen für wässrige Druckfarben zum Aufbringen von heiss sublimierbaren Dispersionsfarbstoffen auf Thermotransferdruckpapier im Tiefdruck, dadurch gekennzeichnet, dass als Komponenten

a) ein Copolymerisat aus Vinylacetat und einer ungesättigten niedermolekularen Carbonsäure,

b) ein Copolymerisat aus Maleinanhydrid und Ethylen oder eine Polyacrylsäure,

c) eine Verbindung der Formel

$$C_nH_{2n+2-m}(OH)_m$$

in der n eine ganze Zahl von 4 bis 6 und m 1 bis 6 ist, mit der Massgabe, dass m kleiner oder gleich n ist,

d) eine Verbindung der Formel

$$C_aH_{2a+2-b}[O(CH_2-\underset{\displaystyle CH_3}{\underset{|}{C}}H-O)_{x/b}-H]_b$$

in der a eine ganze Zahl von 2 bis 6,

b eine ganze Zahl von 1 bis 6 und

x eine Zahl von 8 bis 60 ist, mit der Massgabe, dass b kleiner oder gleich a ist, und

e) eine Verbindung der Formel

$$C_yH_{2y+2-z}(OH)_z$$

in der y eine ganze Zahl von 1 bis 6 und z eine ganze Zahl von 1 bis 6 ist, mit der Massgabe, dass z kleiner oder gleich y ist, eingesetzt werden.

2. Verdickungsmischungen nach Anspruch 1, gekennzeichnet durch einen Gehalt, bezogen auf 1000 g der fertigen Druckfarbe, an den folgenden Mengen der Komponenten:

a) 10 bis 100 g, insbesondere 10 bis 50 g,

b) 0,5 bis 10 g, insbesondere 1 bis 5 g,

c) 3 bis 60 g, insbesondere 3 bis 30 g,

d) 2 bis 50 g, insbesondere 3 bis 30 g und

e) 5 bis 150 g, insbesondere 5 bis 80 g.

3. Verfahren zur Herstellung von Thermotransferdruckpapieren durch Bedrucken von Papier mit wässrigen, heiss sublimierbaren Dispersionsfarbstoffe enthaltenden Druckfarben im Tiefdruck, dadurch gekennzeichnet, dass die Druckfarben eine Verdickungsmischung nach Anspruch 1 oder 2 enthalten und nach dem Druck jeder Farbe eine Zwischentrockung erfolgt.

4. Thermotransferdruckpapier, das im Tiefdruck mit einer wässrigen Druckfarbe bedruckt wurde, die neben den heiss sublimierbaren Dispersionsfarbstoffen eine Verdickungsmischung nach Anspruch 1 oder 2 enthielt.

## Revendications

1. Mélanges épaississants pour encres aqueuses d'impression pour l'application de colorants en dispersion, sublimables à chaud, par impression en héliogravure sur du papier pour impression par report thermique, caractérisés en ce qu'ils comportent comme composants:

a) un copolymère de l'acétate de vinyle et d'un acide carboxylique insaturé à bas poids moléculaire,

b) un copolymère de l'anhydride maléique et de

l'éthylène ou un poly(acide acrylique),

c) un composé de formule:

$$C_nH_{2n+2-m}(OH)_m$$

(dans laquelle n est un nombre entier valant 4 à 6 et m vaut 1 à 6, étant bien entendu que m est inférieur ou étal à n),

d) un composé de formule:

$$C_aH_{2a+2-b}[O(CH_2-\underset{\substack{|\\CH_3}}{C}H-O)_{x/b}-H]_b$$

(dans laquelle a est un nombre entier valant 2 à 6, b est un nombre entier valant 1 à 6, et x est un nombre valant 8 à 60, étant bien entendu que b est inférieur ou égal à a), et

c) un composé de formule:

$$C_yH_{2y+2-z}(OH)_z$$

(dans laquelle y est un nombre entier valant 1 à 6 et z est un nombre entier valant 1 à 6, étant bien entendu que z est inférieur ou égal à y).

2. Mélanges épaississants selon la revendication 1, caractérisés en ce qu'ils contiennent, pour 1000 g de l'encre d'impression terminée, les quantités suivantes des composants:

a) 10 à 100 g, notamment 10 à 50 g,

b) 0,5 à 10 g, notamment 1 à 5 g,

c) 3 à 60 g, notamment 3 à 30 g,

d) 2 à 50 g, notamment 3 à 30 g, et

e) 5 à 150 g, notamment 5 à 80 g.

3. Procédé de production de papiers pour impression par report thermique, par impression du papier, en héliogravure, à l'aide d'encres aqueuses d'impression contenant des colorants en dispersion sublimables à chaud, procédé caractérisé en ce que les encres d'impression contiennent un mélange épaississant selon la revendication 1 ou 2 et en ce que, après l'impression de chaque couleur, on soumet le papier à un séchage intermédiaire.

4. Papier pour impression par report thermique, caractérisé en ce qu'il a été imprimé par héliogravure à l'aide d'une encre aqueuse d'impression qui, en plus des colorants en dispersion sublimables à chaud, contient un mélange épaississant selon la revendication 1 ou 2.

## Claims

1. Thickener mixtures for the manufacture of aqueous printing inks suitable for gravure printing heat sublimable disperse dyestuffs onto heat transfer printing paper sheets, which comprises using as the components:

a) a copolymer of vinyl acetate and an unsaturated low molecular weight carboxylic acid,

b) a copolymer of maleic anhydride and ethylene, or a polyacrylic acid,

c) a compound of the formula

$$C_nH_{2n+2-m}(OH)_m$$

in which n is an integer of from 4 to 6 and m is an integer of from 1 to 6, with the proviso that m is smaller than or identical to n,

d) a compound of the formula

$$C_aH_{2a+2b}[O(CH_2-\underset{\substack{|\\CH_3}}{C}H-O)_{x/b}-H]_b$$

in which a is an integer of from 2 to 6, b is an integer of from 1 to 6, and x is a number of from 8 to 60, with the proviso that b is smaller than or identical to a, and

e) a compound of the formula

$$C_yH_{2y+2-z}(OH)_z$$

in which y and z each are an integer of from 1 to 6 with the proviso that z is smaller than or identical to y.

2. Thickener mixtures as claimed in claim 1, which comprises, per 1 000 g of the ready-to-use-printing ink, the following amounts of components:

a) 10 to 100 g, especially 10 to 50 g,

b)0.5 to 10 g, especially 1 to 5 g,

c) 3 to 60 g, especially 3 to 30 g,

d)2 to 50 g, especially 5 to 30 g and

e) 5 to 150 g, especially 5 to 80 g.

3. Process for the manufacture of heat transfer printing paper sheets by printing of paper according to the gravure printing method with aqueous printing inks containing heat sublimable disperse dyestuffs, wherein the printing inks contain a thickener mixture as claimed in claim 1 or 2, and an intermediate drying step follows the print of each color.

4. Heat transfer printing paper sheet which has been printed according to the gravure printing process with an aqueous printing ink containing a thickener mixture as claimed in claim 1 or 2, in addition to the heat sublimable disperse dyestuffs.